# EUROPEAN PATENT SPECIFICATION

(11) **EP 2 679 619 B1**
(45) Date of publication and mention of the grant of the patent: **24.02.2021**
(21) Application number: 12750130.2
(22) Date of filing: 30.01.2012
(51) Int. Cl.: C08J 5/04, C08J 5/24, D01F 9/22

(54) **FIBER REINFORCED COMPOSITE MATERIAL**
FASERVERSTÄRKTES VERBUNDMATERIAL
MATÉRIAU COMPOSITE RENFORCÉ PAR DES FIBRES

(30) Priority: 23.02.2011 JP 2011036859
(43) Date of publication of application: 01.01.2014
(73) Proprietor: Toray Industries, Inc., Tokyo, 103-8666 (JP)
(72) Inventor: KAJIWARA, Kentaro, Shiga 5208558 (JP); SHIMOYAMA, Satoru, Shiga 5208558 (JP); HORIGUCHI, Tomoyuki, Shiga 5208558 (JP)
(74) Representative: Mewburn Ellis LLP
(86) International application number: PCT/JP2012/051984
(87) International publication number: WO 2012/114829

(56) References cited:
- EP-A1- 0 042 006
- JP-A- 6 294 093
- JP-A- 7 149 927
- JP-A- 8 176 322
- JP-A- 2007 512 449
- JP-A- 2008 208 316
- JP-A- 2010 525 101
- US-A- 4 788 104
- US-A- 5 792 555
- DATABASE WPI Week 198409 Thomson Scientific, London, GB; AN 1984-051587 XP002772506, & JP S59 9046 A (NIPPON VILENE KK) 18 January 1984 (1984-01-18)

## Description

The present invention relates to a fiber reinforced composite material composed of reinforced fibers and a matrix (resin, metal or ceramic material), and having isotropy and a large tensile strength.

### BACKGROUND ART

A fiber reinforced composite material composed of reinforced fibers, such as carbon fibers or glass fibers, and a matrix (resin, metal or ceramic material) has been used for a variety of articles, such as airplanes, automobiles, sporting goods and cases for musical instruments. The fiber reinforced composite material used for such articles is generally desired to have a large tensile strength and isotropy.

### PRIOR ART DOCUMENTS

### PATENT DOCUMENTS

For example, Patent Document 1 discloses, as a material high in productivity, a fiber reinforced composite material in which reinforced fibers that are short fibers are mixed with a matrix resin.

Patent Document 2 discloses a fiber reinforced composite material obtained by producing a wet nonwoven fabric made of short fibers, and subsequently impregnating the fabric with a matrix resin in order not to cause a problem that the short fibers flow when the composite material is shaped.

Patent Document 3 discloses a fiber reinforced composite material obtained by producing a dry nonwoven fabric made of short fibers, and subsequently impregnating the fabric with a matrix resin in order not to cause a problem that the short fibers flow when the composite material is shaped or a wet web is produced.

In general, long fibers are used for articles required to have a large tensile strength. For example, Patent Document 4 discloses a fiber reinforced composite material about which both of a large tensile strength and isotropy are achieved at a high level by impregnating long fibers arranged into one direction with a matrix resin to yield sheets, and subsequently laminating two or more of the resultant sheets onto each other so as to face their fibers into various directions.

Patent Document 5 discloses a warp knitted sheet in which long fibers that are carbon fibers are used as its inserted warp.

Patent Document 6 discloses a fiber reinforced composite material obtained by impregnating continuous fibers made into a fabric with a matrix resin.
Patent Document 1: WO 2007/020910 pamphlet
Patent Document 2: JP-A-2010-274514
Patent Document 3: JP-A-2006-2294
Patent Document 4: JP-A-2010-270420
Patent Document 5: JP-A-2010-43400
Patent Document 6: JP-A-2010-18909

EP0042006 describes fiber-reinforced resins. The resin may comprise a cloth constituted from crimped carbon fibers.

US5792555 describes a hybrid yarn including crimped filaments which can be used in fiber-reinforced thermoplastic articles.

US4788104 describes plastic articles containing a granular composite containing crimped fibers.

### SUMMARY OF THE INVENTION

### PROBLEMS TO BE SOLVED BY THE INVENTION

About the fiber reinforced composite material disclosed in Patent Document 1, the fibers are easily oriented into a direction along which the matrix resin flows when the composite material is shaped. Thus, it is difficult for the resultant to gain isotropy.

About the fiber reinforced composite material disclosed in Patent Document 2, the fibers are easily oriented, at the time of producing the wet nonwoven fabric, into a direction along which a dispersing medium, such as water, flows. Thus, it is difficult that the composite material gains high isotropy. This composite material easily becomes low in productivity since a production process thereof requires the step of dispersing the fibers in water or some other, and the step of drying the sheet. Additionally, in the case of using short fibers, which are small in fiber length, to make it easy to disperse the fibers in water or some other, it is difficult to obtain a fiber reinforced composite material having a large tensile strength.

About the fiber reinforced composite material disclosed in Patent Document 3, short fibers that are larger in fiber length are used than about composite materials obtained in the case of mixing fibers with a matrix resin, or making fibers into a wet nonwoven fabric. For this reason, this composite material can gain a relatively large tensile strength but cannot gain a sufficiently large tensile strength easily. Moreover, the composite material easily becomes low in productivity since a production process thereof requires the step of cutting the fibers into sheets.

About the fiber reinforced composite material disclosed in Patent Document 4, in which long fibers are arranged into one direction, it is necessary to laminate the two or more sheets so as to face their fibers into various directions in order to improve isotropy. Thus, this composite material easily becomes low in productivity. Moreover, the material tends to undergo interlayer exfoliation easily since the material has no fibers for interlayer bonding.

The sheet disclosed in Patent Document 5 has knitted ground yarns. Thus, the sheet has higher isotropy than any sheet obtained by arranging carbon fibers merely into one direction. However, this sheet cannot gain sufficient isotropy easily.

The fiber reinforced composite material disclosed in Patent Document 6, in which long fibers are made into a woven knitted product, does not easily gain isotropy. Thus, in general, layers of the composite material are laminated onto each other, and this laminate is used. Accordingly, the composite material easily becomes low in productivity, and undergo interlayer exfoliation easily.

An object of the invention is to overcome the above-mentioned drawbacks in the prior art, and to provide a fiber reinforced composite material about which the anisotropy thereof can be controlled by a technique high in productivity, and further a large tensile strength can be gained.

### SOLUTIONS TO THE PROBLEMS

In order to attain the object, the fiber reinforced composite material of the invention has the following configuration.

The present invention provides a fiber reinforced composite material comprising reinforcing fibers that are fibers having a length of more than 100mm, and a matrix, wherein the reinforcing fibers are crimped. The individual crimps of adjacent reinforcing fibers are oriented in different directions and the reinforcing fibers are arranged into one direction.

In the fiber reinforced composite material of the invention, it is preferred that the crimp of the reinforcing fibers is in a zigzag form.

In the fiber reinforced composite material of the invention, the reinforcing fibers are arranged into one direction.

In the fiber reinforced composite material of the invention, it is preferred that the reinforcing fibers are PAN-based carbon fibers.

In the fiber reinforced composite material of the invention, it is preferred that the number of crimp of the reinforcing fibers is from 1 to 25, wherein the number of crimps is the number of times of bending of a reinforced fibers per 25.4mm, the number of crimps being measured using the method described in JIS L 1015(2010).

In the fiber reinforced composite material of the invention, it is preferred that the matrix is a thermoplastic resin.

### EFFECTS OF THE INVENTION

Any fiber reinforced composite material composed of reinforcing fibers that are long fibers, and a matrix cannot easily gain isotropy unless layers of the material are laminated onto each other. However, the fiber reinforced composite material of the invention can control the anisotropy and can gain a large tensile strength even when layers of the material are not laminated onto each other.

### MODES FOR CARRYING OUT THE INVENTION

The fiber reinforced composite material of the invention is a fiber reinforced composite material composed of reinforcing fibers that are long fibers having a length of more than 100mm, and a matrix, wherein the reinforcing fibers are crimped.

The word "crimped" or "crimp" generally denotes a form that a fiber or fibers are finely waved or curled to be shrunken. The crimp that the reinforcing fibers in the invention have may also be either in the form of a curved line of a coil, spring or wave, or in a zigzag form. The zigzag form referred to herein denotes a crimp form having straight portions, and means a state that a straight line is bent into up and down directions and/or into right and left directions.

About the crimp in the form of a curved line, the pattern thereof changes continuously in the fiber axial direction, so that the resultant fiber reinforced composite material becomes high in isotropy. However, the fibers have no straight portions. Thus, when the case of using these fibers is compared with any case of using fibers having straight portions, it is more difficult that the former case gains a large tensile strength. However, the former case has an advantage of gaining high isotropy relatively easily since the fiber axial direction in the case changes continuously.

In order that reinforcing fibers can contribute to increase the in tensile strength, it is necessary that the fibers have, in the direction of the tension, straight portions having a length equal to or more than a predetermined length. This necessary length cannot be specified flatly since the length depends on the degree of the bonding between the reinforcing fibers and the matrix. The composite material does not easily gain a large tensile strength when the reinforcing fibers are in the form of a curved line. The reinforcing fibers in a zigzag form, which has straight portions, favorably produce a large strength with more ease.

When the reinforcing fibers and the matrix have an ordinary adhesive force therebetween, the number of crimp is preferably from 1 to 25. When the number of crimp is in this preferred range, the direction of the straight portions of the reinforcing fibers, which contribute to the large tensile strength, is rich in variation. Thus, the composite material can easily be made high in isotropy. From another viewpoint, the straight portions do not become too short so that the adhesive force between the reinforcing fibers and the matrix is sufficient. As a result, the reinforcing fibers contribute to the respective tensile strengths in the axial directions of the fibers faced into various directions by the crimp. Accordingly, the composite material can easily be made high in isotropy.

The number of crimp referred to in the invention means the number of times of bending of a reinforcing fiber per 25.4 mm, the number being measured by a method described in JIS L 1015 (2010) . It can be checked in the same way as used in this measurement whether or not a curved line form as described above comes under a zigzag form.

The crimp in a curved line form can be gained by, for example, a method of heating and shrinking side-by-side type fibers, in which components different from each other in thermal shrinkage ratio or some other shrinkage ratio are joined with each other, a knitting-deknitting method of shaping the reinforcing fibers once into the form of fabric and then cancelling this form, or a false-twisting processing of twisting the fibers while heating the fibers.

The crimp in a zigzag form can be gained by means of, for example, a mechanical crimping machine in a pushing/inserting-operation mode by effect of air or a roller, or a crimping machine in a mode of pushing fibers onto a heated gear.

When carbon fibers started to be used for gaining a high-tensile-strength sheet, a processing technique for nylon or polyester fibers was applied and a cloth which was a fabric was used. However, on the basis of a finding that a cloth is declined in physical properties by stress concentrated onto bent regions of its woven threads, it is a recent common sense that carbon fibers are used in the state of being kept in a straight form as far as possible. At the bent regions of this fabric, its fibers are faced to different directions, crossed and contacted each other. However, at bent regions of the crimp that the reinforcing fibers in the invention have, fibers that cross and contact each other are not necessarily present. Thus, the reinforcing fibers in the invention gain high physical properties even when the fibers have bent regions. The inventors have found out this matter.

The long fibers referred to in the invention means fibers not cut into short fibers. In order that a composite material may be made high in isotropy, there is known a method of cutting long fibers into short fibers, and then arranging the short fibers at random. However, this method includes a step for the cutting and therefore the productivity is easily declined. The cut fibers are small in length and a large tensile strength is not easily gained. In the invention, the length of fibers picked out from any composite material is directly measured, and fibers having a length more than 100 mm are used as the long fibers. It is preferred that the proportion of the fibers each extending continuously over 100 mm is higher for the following reason: as the proportion is higher, the composite material of the invention more easily gains high physical properties, as an advantage of the long fibers, based on the matter that the fibers each extend continuously.

In the invention, the reinforcing fibers are arranged into one direction. An utmost characteristic of the invention is that the composite material can gain isotropy even when the reinforcing fibers are arranged into one direction. In general, fiber axes of fibers are faced to the same direction in a production process thereof; thus, it is preferred from the viewpoint of productivity that the produced fibers are made, as they are, into a fiber reinforced composite material.

About a crimp gained by a mechanical crimping machine in a pushing/inserting-operation mode, a pushed/inserted tow gains the crimp in the same timing. As a result, reinforcing fibers adjacent to each other gain the crimp in the same direction at the same pitch. In a case where the reinforcing fibers are arranged in a single direction in this state, adjacent ones of these reinforcing fibers are easily cut therebetween when the reinforcing fibers are pulled in a direction perpendicular to the fiber axial direction. Thus, the reinforcing fibers do not easily contribute to the strength. In the invention the crimped reinforcing fibers are opened. The fiber-opening achieves both of the fiber arrangement into the single direction and a matter that the individual crimps of the adjacent reinforcing fibers are faced to different directions. In this case, the number of points in which the fibers cross each other increases so that the reinforcing fibers easily contribute to the tensile strength.

The wording "arranged into one direction" referred to in the invention means that the respective orientation directions of fibers are macroscopically faced to one direction. This results from a matter that the fibers are made, as they are, into a fiber reinforced composite material with the respective fiber axes of fibers faced to the same direction in a production process thereof as described above. The wording "the respective orientation directions of fibers are macroscopically faced to one direction" denotes the following: the fibers, which are target crimped reinforced fibers, are processed into a two-dimensional image; all of its bent points are plotted and then the plotted positions are linearly approximated by the method of least-square, thereby giving straight lines; and the respective directions of the lines are faced to the same direction. However, when a tow composed of gathered fibers is spread into a sheet form, the axial direction of each of the fibers is not necessarily consistent with the machine direction thereof so that some of the fibers are faced to a direction slightly different from the direction to which the other fibers are faced. However, this is allowable since the productivity of the composite material is not directly lowered.

The reinforcing fibers used in the invention may be inorganic fibers or organic fibers. Examples thereof include natural fibers, regenerated fibers, semi-synthetic fibers, synthetic fibers, PAN-based carbon fibers, pitch-based carbon fibers, glass fibers, aramid fibers, and boron fibers. From the viewpoint of an excellent balance between productivity and strength, PAN-based or pitch-based carbon fibers are preferred. In particular, acrylic fibers or flame-resistant state fibers, which are a precursor of PAN-based carbon fibers, are high in fiber elongation and high in crimp-setting property so as to be preferred for gaining the crimp in the invention.

When the reinforcing fibers are PAN-based carbon fibers, the crimp in the invention can be attained by working when the fibers to be crimped are in any one of the respective states of acrylic fibers and flame-resistant yarns, as the precursor, and the state of carbon fibers. As described above, in the acrylic fiber state and the flame-resistant yarn state, the fibers are high in elongation, and are also high in crimp-setting property; thus, it is preferred to work the fibers in these states.

The matrix used in the invention may be any one of resin, metal and ceramic materials. It is preferred that the elastic modulus of the matrix according to a tensile test thereof is 1 GPa or more since the reinforcing fibers easily produce the advantageous effect. Examples of the resin include thermosetting resins such as epoxy resin, unsaturated polyester resin, melamine resin, phenolic resin, and polyimide resin; and thermoplastic resins such as polyetheretherketone, polyphenylene sulfide, polyamide, and polypropylene. Examples of the metal include light metals such as aluminum, magnesium, beryllium, and titanium; and alloys such as stainless steel. Examples of the ceramic material include non-oxide ceramic materials such as silicon carbide, boron carbide, and silicon nitride; and oxide ceramic materials such as barium aluminosilicate and lithium aluminosilicate. Thermoplastic resins are preferred since the resins are easily shaped so as to be favorable from the viewpoint of productivity.

The method for integrating the reinforcing fibers into the matrix is not particularly limited. Examples thereof include drawing, pressing, a method of making the material of the matrix fibrous and then blending the fibrous material with the reinforcing fibers, and an integrating method in which two or more of these methods are combined with each other.

When plural sheets of the thus obtained isotropic fiber reinforced composite material are laminated onto each other to face the respective fibers of the sheets into various directions, the composite material can be improved in isotropy. In order to improve productivity and make the composite material excellent in peel strength, it is preferred to supply, for a desired purpose, a single sheet of the material or a laminate in which two sheets of the material are laminated onto each other so that the respective sides of the sheets have an angle of 90°. It is more preferred to supply a single sheet of the material.

The fibers constituting the fiber reinforced composite material of the invention do not need to be wholly crimped reinforcing fibers that are long fibers. The crimped reinforcing fibers need only to be contained in the composite material at least in such a degree that the contained crimped reinforcing fibers contribute to the isotropy and the large tensile strength.

### EXAMPLES

Physical property values described in examples were measured by respective methods described below.

### A. Number of crimp and Crimp Form

The number of crimp was measured by a method described in JIS L 1015 (2010), and the crimp form thereof was identified through observation.

### B. Tensile Strength and Isotropy Index

In accordance with a method described in JIS K 7162 (1994), from any sample, a small test piece of type 1BA was prepared into each of 0°, 15°, 30°, 45°, 60°, 75° and 90° directions in the plane of the sample. The respective tensile stress at break of the resultant test pieces was measured. The average of the respective tensile stress at break in all the directions was defined as the tensile strength. The ratio of the direction (A) in which the tensile stress at break is the largest to the direction (B) in which the tensile stress at break is the smallest, σ_{A}/σ_{B}, was defined as the isotropy index.

### C. Productivity

On the basis of the handleability of any sample and a period necessary for producing the sample, the sample was evaluated into one out of three ranks, i.e., high productivity (good), low productivity (bad), and middle productivity (fair).

### (Example 1)

Polyacrylonitrile fibers were thermally treated in the air of 240°C to yield polyacrylonitrile flame-resistant yarns having a density of 1.38 g/cm³.

Tows in which 4,000 of the flame-resistant yarns were gathered with each other were crimped by means of a mechanical crimping machine in a pushing/inserting-operation mode. Subsequently, the tows were carbonized in the atmosphere of nitrogen of 1,500°C to yield carbon fiber tows. The density of the carbon fibers was 1.80 g/cm³, and the number of crimp was 10. The crimp of the fibers was in a zigzag form.

Next, in a 0.1-N solution of ammonium hydrogencarbonate in water, the carbon fiber tows were each used as an anode to subject the surface of the carbon fibers to oxidization treatment at an electricity quantity of 100 C/g.

The carbon fiber tows were opened and further the resultants were spread to have substantially the same thickness in the width direction thereof so as to be arranged in one direction. Nylon 6 having a density of 1.14 g/cm³ was melted and impregnated into the carbon fibers to adjust the weight of the nylon to 2.5 times that of the carbon fibers. In this way, a fiber reinforced composite material having a density of 1.33 g/cm³ was yielded. The resultant fiber reinforced composite material was evaluated. As a result, as shown in Table 1, this material was excellent in tensile strength and isotropy index, and further high in productivity.

### (Comparative Example 1)

A fiber reinforced composite material having a density of 1.33 g/cm³ was yielded in the same way as in Example 1 except that the flame-resistant yarn tows were not crimped. The resultant fiber reinforced composite material was evaluated. As a result, as shown in Table 1, this material was excellent in tensile strength and also good in productivity; however, the isotropy index thereof was poor.

### (Comparative Example 2)

Polyacrylonitrile fibers were thermally treated in the air of 240°C to yield polyacrylonitrile flame-resistant yarns having a density of 1.38 g/cm³.

Tows in which 4,000 of the flame-resistant yarns were gathered with each other were carbonized in the atmosphere of nitrogen of 1,500°C to yield carbon fiber tows. The density of the carbon fibers was 1.80 g/cm³.

Next, in a 0.1-N solution of ammonium hydrogencarbonate in water, the carbon fiber tows were each used as an anode to subject the surface of the carbon fibers to oxidization treatment at an electricity quantity of 100 C/g.

The carbon fiber tows were cut into a fiber length of 2 mm with a guillotine-type cutter. Water was added thereto to disentangle the cut tows. Therefrom, a wet nonwoven fabric was produced, using a handsheets machine.

Nylon 6 having a density of 1.14 g/cm³ was melted and impregnated into the wet nonwoven fabric to adjust the weight of the nylon to 2.5 times that of the carbon fibers. In this way, a fiber reinforced composite material having a density of 1.33 g/cm³ was yielded. The resultant fiber reinforced composite material was evaluated. As a result, as shown in Table 1, this material was poor in tensile strength and productivity. The isotropy index was also insufficient.

### (Example 2)

Polyacrylonitrile fibers were subjected to false-twisting processing to yield false-twisted crimped fibers. The crimped fibers were thermally treated in the air of 240°C to yield polyacrylonitrile flame-resistant yarns having a density of 1.38 g/cm³.

Tows in which 4,000 of the flame-resistant yarns were gathered with each other were carbonized in the atmosphere of nitrogen of 1,500°C to yield carbon fiber tows. The density of the carbon fibers was 1.80 g/cm³, and the number of crimp was 10. The crimp of the fibers was in a wave form.

Next, in a 0.1-N solution of ammonium hydrogencarbonate in water, the carbon fiber tows were each used as an anode to subject the surface of the carbon fibers to oxidization treatment at an electricity quantity of 100 C/g.

The carbon fiber tows were opened and further the resultants were spread to have substantially the same thickness in the width direction thereof so as to be arranged in one direction. Nylon 6 having a density of 1.14 g/cm³ was melted and impregnated into the carbon fibers to adjust the weight of the nylon to 2.5 times that of the carbon fibers. In this way, a fiber reinforced composite material having a density of 1.33 g/cm³ was yielded. The resultant fiber reinforced composite material was evaluated. As a result, as shown in Table 1, this material was excellent in isotropy index and productivity.

### (Comparative Example 3)

Side-by-side type fibers each composed of polyacrylonitrile materials different from each other in polymerization degree were thermally treated in the air of 240°C to yield polyacrylonitrile flame-resistant yarns having a density of 1.38 g/cm³.

Tows in which 4,000 of the flame-resistant yarns were gathered with each other were carbonized in the atmosphere of nitrogen of 1,500°C to yield carbon fiber tows. The density of the carbon fibers was 1.80 g/cm³, and the number of crimp thereof was 28. The crimp of the fibers was in a coil form.

Next, in a 0.1-N solution of ammonium hydrogencarbonate in water, the carbon fiber tows were each used as an anode to subject the surface of the carbon fibers to oxidization treatment at an electricity quantity of 100 C/g.

The carbon fiber tows were cut into a length of 51 mm with a guillotine-type cutter. Next, using a carding machine and a web-laying apparatus, the cut tows were made into webs in which the fibers opened into one direction were arranged. Nylon 6 having a density of 1.14 g/cm³ was melted and impregnated into the webs to adjust the weight of the nylon to 2.5 times that of the carbon fibers. In this way, a fiber reinforced composite material having a density of 1.33 g/cm³ was yielded. The resultant fiber reinforced composite material was evaluated. As a result, as shown in Table 1, this material was good in isotropy index but poor in tensile strength and productivity.

### (Comparative Example 4)

Polyacrylonitrile fibers were thermally treated in the air of 240°C to yield polyacrylonitrile flame-resistant yarns having a density of 1.38 g/cm³.

Tows in which 4,000 of the flame-resistant yarns were gathered with each other were crimped by means of a mechanical crimping machine in a pushing/inserting-operation mode. Subsequently, the crimped tows were carbonized in the atmosphere of nitrogen of 1,500°C to yield carbon fiber tows. The density of the carbon fibers was 1.80 g/cm³, and the number of crimp was 10. The crimp of the fibers was in a zigzag form.

Next, in a 0.1-N solution of ammonium hydrogencarbonate in water, the carbon fiber tows were each used as an anode to subject the surface of the carbon fibers to oxidization treatment at an electricity quantity of 100 C/g.

The carbon fiber tows were cut into a length of 51 mm with a guillotine-type cutter. Next, using a carding machine and a web-laying apparatus, the cut tows were made into webs in which the fibers opened into one direction were arranged. Nylon 6 having a density of 1.14 g/cm³ was melted and impregnated into the webs to adjust the weight of the nylon to 2.5 times that of the carbon fibers. In this way, a fiber reinforced composite material having a density of 1.33 g/cm³ was yielded. The resultant fiber reinforced composite material was evaluated. As a result, as shown in Table 1, this material was excellent in tensile strength and isotropy index but poor in productivity.

### (Example 3)

The carbon fiber tows yielded in the same way as in Example 1 were opened and further the resultants were spread to have substantially the same thickness in the width direction thereof so as to be arranged in one direction. These were then placed to arrange the fibers into two directions perpendicular to each other. Nylon 6 having a density of 1.14 g/cm³ was melted and impregnated into the carbon fibers to adjust the weight of the nylon to 2.5 times that of the carbon fibers. In this way, a fiber reinforced composite material having a density of 1.33 g/cm³ was yielded. The resultant fiber reinforced composite material was evaluated. As a result, as shown in Table 1, this material was excellent in tensile strength and isotropy index, and further good in productivity.

### (Example 4)

Tows in which 4,000 aramid fibers having a density of 1.44 g/cm³ were gathered with each other were crimped by means of a mechanical crimping machine in a pushing/inserting-operation mode. The number of crimp of the crimped fibers was 10, and the crimp of the fibers was in a zigzag form.

The aramid fiber tows were opened and further the resultants were spread to have substantially the same thickness in the width direction thereof so as to be arranged in one direction. Nylon 6 having a density of 1.14 g/cm³ was melted and impregnated into the carbon fibers to adjust the weight of the nylon to 3.0 times that of the carbon fibers. In this way, a fiber reinforced composite material having a density of 1.22 g/cm³ was yielded. The resultant fiber reinforced composite material was evaluated. As a result, as shown in the table, this material was excellent in tensile strength and isotropy index, and further high in productivity.

### (Example 5)

A fiber reinforced composite material having a density of 1.33 g/cm³ was yielded except that the number of crimp was changed to 30. The resultant fiber reinforced composite material was evaluated. As a result, as shown in Table 1, this material was excellent in tensile strength and isotropy index, and further high in productivity.

### (Example 6)

The carbon fiber tows yielded in the same way as in Example 1 were opened and further the resultants were spread to have substantially the same thickness in the width direction thereof so as to be arranged in one direction. The resultants were each sandwiched between release sheets onto each of which an epoxy resin having a density of 1.14 g/cm³ was painted, thus impregnating the epoxy resin thereinto so as to adjust the weight of the epoxy resin to 2.5 times that of the carbon fibers. In this way, a fiber reinforced composite material having a density of 1.33 g/cm³ was yielded. The resultant fiber reinforced composite material was evaluated. As a result, as shown in Table 1, this material was excellent in tensile strength and isotropy index, and further high in productivity.

**[Table 1]**

| | Structure of fiber reinforced composite material | | | | | | Evaluation results | | |
|---|---|---|---|---|---|---|---|---|---|
| | Reinforced fibers | | | | | Matrix | | | |
| | - | Fiber length | Fiber direction | Crimp form | number of crimp | - | Tensile strength | Isotropy index | Productivity |
| | | mm | | | | | MPa | - | - |
| Example 1 | Carbon fibers | 100 or more | One direction | Zigzag | 10 | Nylon 6 | 246 | 1.27 | good |
| Comparative Example 1 | Carbon fibers | 100 or more | One direction | Not crimped | Not crimped | Nylon 6 | 290 | 5.80 | good |
| Comparative Example 2 | Carbon fibers | 2 | Random directions | Not crimped | Not crimped | Nylon 6 | 165 | 1.45 | bad |
| Example 2 | Carbon fibers | 100 or more | One direction | Wave | 10 | Nylon 6 | 121 | 1.30 | good |
| Comparattive Example 3 | Carbon fibers | 51 | One direction | Coil | 28 | Nylon 6 | 107 | 1.33 | bad |
| Comparative Example 4 | Carbon fibers | 51 | One direction | Zigzag | 10 | Nylon 6 | 219 | 1.27 | bad |
| Example 3 | Carbon fibers | 100 or mor e | Two perpendicular directions | Zigzag | 10 | Nylon 6 | 254 | 1.17 | fair |
| Example 4 | Aramid fibers | 100 or more | One direction | Zigzag | 10 | Nylon 6 | 214 | 1.22 | good |
| Example 5 | Carbon fibers | 100 or more | One direction | Zigzag | 30 | Nylon 6 | 208 | 1. 15 | good |
| Example 6 | Carbon fibers | 100 or more | One direction | Zigzag | 10 | Epoxy resin | 316 | 1.34 | good |

### INDUSTRIAL APPLICABILITY

The fiber reinforced composite material of the invention is usable for a variety of articles, such as airplanes, automobiles, sporting goods and cases for musical instruments.

## Claims

1. A fiber reinforced composite material, comprising reinforcing fibers that are fibers having a length of more than 100 mm, and a matrix, wherein the reinforcing fibers are crimped; and wherein the individual crimps of adjacent reinforcing fibers are oriented in different directions and the reinforcing fibers are arranged into one direction.

2. The fiber reinforced composite material according to claim 1, wherein the crimp of the reinforcing fibers is in a zigzag form.

3. The fiber reinforced composite material according to claim 1 or claim 2, wherein the number of crimp of the reinforcing fibers is from 1 to 25, wherein the number of crimp is the number of times of bending of a reinforced fiber per 25.4 mm, the number of crimps being measured using the method described in JIS L 1015 (2010).

4. The fiber reinforced composite material according to any one of claims 1 to 3, wherein the matrix is a thermoplastic resin.

## Patentansprüche

1. Faserverstärktes Verbundmaterial, das Verstärkungsfasern, die Fasern mit einer Länge von mehr als 100 mm sind, und eine Matrix umfasst, wobei die Verstärkungsfasern gekräuselt sind und wobei die einzelnen Kräuselungen benachbarter Verstärkungsfasern in verschiedene Richtungen ausgerichtet sind und die Verstärkungsfasern in einer Richtung angeordnet sind.

2. Faserverstärktes Verbundmaterial nach Anspruch 1, wobei die Kräuselung der Verstärkungsfasern zickzackförmig ist.

3. Faserverstärktes Verbundmaterial nach Anspruch 1 oder 2, wobei die Anzahl an Kräuselungen der Verstärkungsfasern 1 bis 25 beträgt, wobei die Anzahl an Kräuselungen die Anzahl der Biegungen einer Verstärkungsfaser pro 25,4 mm ist, wobei die Anzahl der Kräuselungen unter Anwendung des in JIS L 1015 (2010) beschriebenen Verfahrens gemessen wird.

4. Faserverstärktes Verbundmaterial nach einem der Ansprüche 1 bis 3, wobei die Matrix ein thermoplastisches Harz ist.

## Revendications

1. Matériau composite renforcé par des fibres, comprenant des fibres de renforcement qui sont des fibres d'une longueur supérieure à 100 mm, et une matrice, dans lequel les fibres de renforcement sont frisées ; et dans lequel les frisures individuelles des fibres de renforcement adjacentes sont orientées dans différentes directions et les fibres de renforcement sont agencées dans une direction.

2. Matériau composite renforcé de fibres selon la revendication 1, dans lequel la frisure des fibres de renforcement est en zigzag.

3. Matériau composite renforcé de fibres selon la revendication 1 ou la revendication 2, dans lequel le nombre de frisures des fibres de renforcement est de 1 à 25, dans lequel le nombre de frisures est le nombre de flexions d'une fibre renforcée pour 25,4 mm, le nombre de frisures étant mesuré selon la méthode décrite dans JIS L 1015 (2010).

4. Matériau composite renforcé de fibres selon l'une quelconque des revendications 1 à 3, dans lequel la matrice est une résine thermoplastique.
